# EUROPÄISCHE PATENTSCHRIFT

(11) **EP 1 250 547 B1**
(45) Veröffentlichungstag und Bekanntmachung des Hinweises auf die Patenterteilung: **28.07.2004**
(21) Anmeldenummer: 01976142.8
(22) Anmeldetag: 24.08.2001
(51) Int. Cl.: F16L 37/084

(54) **ANSCHLUSSVORRICHTUNG FÜR EINE FLUIDLEITUNG**
CONNECTION DEVICE FOR A FLUID LINE
DISPOSITIF DE RACCORD D'UNE CONDUITE DE FLUIDE

(30) Priorität: 25.11.2000 DE 20020052 U
(43) Veröffentlichungstag der Anmeldung: 23.10.2002
(73) Patentinhaber: FESTO AG & Co, 73734 Esslingen (DE)
(72) Erfinder: HALAMA, Wolfgang, 73266 Bissingen (DE)
(74) Vertreter: Abel, Martin, Dipl.-Ing.
(86) Internationale Anmeldenummer: PCT/EP2001/009773
(87) Internationale Veröffentlichungsnummer: WO 2002/042676

(56) Entgegenhaltungen:
- EP-A- 0 264 102
- DE-A- 10 005 870
- GB-A- 2 080 467
- US-A- 5 487 572

## Beschreibung

Die Erfindung betrifft eine Anschlussvorrichtung für eine Fluidleitung, mit einer Anschlusseinheit, die einen durch Steckmontage in einer Aufnahme eines metallischen Haltekörpers platzierten hülsenartigen Einsatzkörper aufweist, an dessen Außenumfang zur Verankerung in der Aufnahme dienende und von einem oder mehreren Vorsprüngen gebildete Verankerungsmittel vorgesehen sind.

Anschlussvorrichtungen dieser Art, die beispielsweise aus der EP 0 723 103 B1 hervorgehen, werden verwendet, um Fluidleitungen an fluidtechnische Geräte wie Ventile oder Antriebe oder dergleichen anschließen zu können. Bei der Anschlussvorrichtung gemäß EP 0 723 103 B1 ist eine Anschlusseinheit vorgesehen, die mit einem als Einsatzkörper ausgebildeten Bestandteil in eine Aufnahme eines Haltekörpers eingesteckt und in dieser Aufnahme verankert wird. Der Haltekörper ist dabei unmittelbar von einem Bestandteil des fluidtechnischen Gerätes gebildet, wobei die Steckmontage im Rahmen eines Einpressvorganges erfolgt, bei dem am Außenumfang des Einsatzkörpers vorgesehene vorsprungartige Verankerungsmittel in die Wandung der Aufnahme eindringen und ein formschlüssiges Verhaken hervorrufen, so dass der Einsatzkörper in der Aufnahme axial unbeweglich gehalten wird.

Anschlussvorrichtungen dieser Art haben den Vorteil, dass bei der Montage der Anschlusseinheit auf einen Schraubvorgang verzichtet werden kann. Andererseits hat sich jedoch gezeigt, dass ein sicherer Halt des Einsatzkörpers in aus Metall bestehenden Haltekörpern - beispielsweise aus Aluminiumdruckguss bestehende Ventilgehäuse - nicht unter allen Umständen zuverlässig gewährleistet werden kann, weil die von einem oder mehreren Vorsprüngen gebildeten Verankerungsmittel beim Einpressen in das härtere Material des Haltekörpers so verformt oder gar abgeschert werden können, dass sie ihrer Verankerungsaufgabe nicht mehr beziehungsweise nicht mehr in dem gewünschten Maße nachkommen können.

Es ist daher die Aufgabe der vorliegenden Erfindung, eine Anschlussvorrichtung der eingangs genannten Art zu schaffen, die auch bei aus Metall bestehendem Haltekörper eine sichere Verankerung des durch Steckmontage in die Aufnahme eingesetzten Einsatzkörpers gewährleistet.

Zur Lösung dieser Aufgabe verfügt die Anschlussvorrichtung über einen aus Kunststoffmaterial bestehenden Haltering, der in einer am Innenumfang der Aufnahme vorgesehenen Ringnut des Haltekörpers fixiert ist, so dass er sich axial in beiden Richtungen bezüglich dem Haltekörper abstützen kann, wobei der Einsatzkörper koaxial in den Haltering eingesteckt ist und mit seinen Verankerungsmitteln in das Kunststoffmaterial des Halteringes eingreift.

Auf diese Weise werden in der Aufnahme des metallischen Haltekörpers in Bezug auf die Verankerungsmaßnahmen Bedingungen geschaffen, die mit denjenigen bei einem aus Kunststoffmaterial bestehenden Haltekörper vergleichbar sind, wobei der Einsatzkörper mit seinen Verankerungsmitteln nicht mehr in das relativ harte Material des metallischen Haltekörpers eingreift, sondern in das weichere Kunststoffmaterial des in der Aufnahme platzierten Halteringes. Der Haltering selbst ist am Haltekörper derart axial fixiert, dass er sich in beiden axialen Richtungen bezüglich dem Haltekörper abstützen kann, was sowohl bei der regelmäßig im Rahmen eines Einpressvorganges stattfindenden Steckmontage als auch bei späterer Zugbeanspruchung einen sicheren Halt des Einsatzkörpers gewährleistet. Der Einsatzkörper ist mittelbar, unter Zwischenschaltung des aus Kunststoffmaterial bestehenden Halteringes, an dem metallischen Haltekörper verankert.

Ein mit der erfindungsgemäßen Bauform erzielter weiterer Vorteil besteht darin, dass bei einer im Betrieb üblichen pulsierenden Innendruckbeaufschlagung der angeschlossenen Fluidleitung die daraus resultierenden wechselnden axialen Beanspruchungen von der verzahnungsartigen Verbindung zwischen den Verankerungsmitteln und dem Haltering sicher aufgenommen werden, wobei der Halterring bei entsprechender Ausgestaltung in der Lage ist, sich großflächig am Haltekörper abzustützen.

Dadurch wird ein Ausreißen im Bereich des Verankerungseingriffes vermieden, wie es beim Stand der Technik auftreten kann, wenn die Verankerungsmittel des Einsatzkörpers unmittelbar mit der Metalloberfläche des Haltekörpers zusammenwirken.

Weitere vorteilhafte Ausgestaltungen der Erfindung gehen aus den Unteransprüchen hervor.

Die am Einsatzkörper vorgesehenen Verankerungsmittel bestehen zweckmäßigerweise aus Metall und können bei einem aus Metall bestehenden Einsatzkörper als unmittelbarer einstückiger Bestandteil des Einsatzkörpers ausgeführt sein.

Die Verankerungsmittel können beispielsweise mehrere mit axialem Abstand aufeinanderfolgende ringförmige Vorsprünge enthalten, die insbesondere jeweils eine zahnartige Profilierung haben und konzentrisch zum Einsatzkörper angeordnet sind. Wie sich allerdings herausgestellt hat, wird ein optimaler Verankerungseingriff dann erzielt, wenn die in den Haltekörper eingreifenden Verankerungsmittel aus nur einem ringförmigen Radialvorsprung bestehen.

Die gewünscht sichere Fixierung des Halteringes in der Aufnahme des Haltekörpers kann besonders einfach dadurch erreicht werden, dass der Haltering in eine Ringnut eingesetzt ist, die mit ihren axial orientierten Flanken den axialen stirnseiten des Halteringes gegenüberliegen, so dass dieser sich daran abstützen kann. Auf diese Weise ist auch besonders einfach die Möglichkeit gegeben, den Haltering allein durch Formschusskontakt mit den Flanken der Ringnut und ohne zusätzliche Befestigungsmaßnahmen wie Verkleben oder Einpressen oder dergleichen in der Aufnahme zu fixieren.

Die Montage des Halteringes ist besonders einfach, wenn er an einer Stelle seines Umfanges geschlitzt ist, so dass er zum Einsetzen in die Ringnut vorübergehend unter Verringerung seines Außenquerschnittes elastisch zusammendrückbar ist. Der Haltering kann beispielsweise im zusammengedrückten Zustand eingeschoben werden, wobei er sich bei Erreichen der Ringnut selbsttätig wieder aufweitet und in die Ringnut einschnappt. Dieser Montagevorgang kann dadurch erleichtert werden, dass zwischen dem Haltering und der Ringnut ein geringfügiges axiales Spiel vorgesehen ist.

Als Material für den Haltering empfiehlt sich Elastomermaterial, wobei besonders gute Ergebnisse mit Polyoxymethylen (POM) erzielt werden.

Eine besonders vorteilhafte Maßnahme besteht auch darin, den Innendurchmesser des dem Haltering axial vorgelagerten äußeren Abschnittes der Aufnahme größer zu wählen als den Innendurchmesser des montierten Halteringes, in Verbindung mit einer weitergehenden Durchmesserabstimmung derart, dass der Innendurchmesser des erwähnten vorgelagerten äußeren Abschnittes der Aufnahme dem von den Verankerungsmitteln definierten Außendurchmesser des Einsatzkörpers entspricht oder vorzugsweise etwas größer ist. Auf diese Weise wird bei der Steckmontage des Einsatzkörpers eine zu hohe Beanspruchung der Verankerungsmittel durch eventuellen Kontakt mit dem harten Material des Halterkörpers vermieden, wobei sogar ein Kontakt völlig ausgeschlossen werden kann, was die Gefahr eines Abscherens der Verankerungsmittel beim Einpressen des Einsatzkörpers verringert oder gänzlich ausschließt.

Zum Festhalten der anzuschließenden Fluidleitung können im Bereich des Innenumfanges des Einsatzkörpers Haltemittel vorgesehen sein, beispielsweise in Gestalt federelastisch beweglicher Krallenelemente, die eine eingeführte Fluidleitung am Außenumfang beaufschlagen können. Eine in diesem Zusammenhang besonders vorteilhafte Bauform sieht vor, die Krallenelemente als Bestandteil eines am Einsatzkörper fixierten Ringkörpers auszuführen.

Es kann ferner ein bezüglich dem Einsatz insbesondere axial beweglicher Lösekörper vorhanden sein, mit dem durch manuelle Betätigung derart auf die Haltemittel eingewirkt werden kann, dass diese eine nach radial außen gerichtete Freigabebewegung ausführen, um eine zuvor eingesteckte Fluidleitung zur Entnahme freizugeben.

Obgleich es prinzipiell möglich wäre, die Anschlussvorrichtung insgesamt als separate Baueinheit auszuführen, die man am vorgesehenen Einsatzort installiert, ergeben sich besondere Vorteile vor allem dann, wenn der Haltekörper der Anschlussvorrichtung unmittelbar von einem Bestandteil eines fluidtechnischen Gerätes gebildet ist, beispielsweise vom Gehäuse dieses Gerätes.

Nachfolgend wird die Erfindung anhand der beiliegenden Zeichnung näher erläutert. In dieser Zeichnung:
- Figur 1: eine bevorzugte Ausführungsform der erfindungsgemäßen Anschlussvorrichtung im Längsschnitt, wobei strichpunktiert eine an die Anschlussvorrichtung angeschlossene Fluidleitung dargestellt ist, und
- Figur 2: einen Querschnitt durch die Anschlussvorrichtung aus Figur 1 gemäß Schnittlinie II-II.

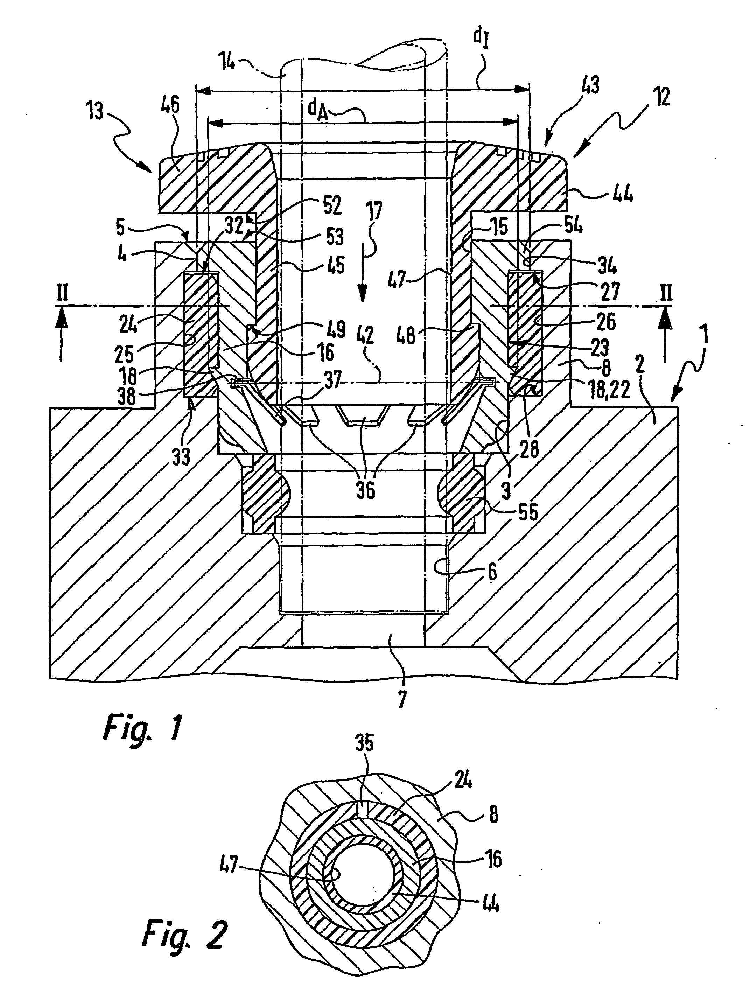

Die Figur 1 zeigt einen Ausschnitt des Gehäuses 2 eines beliebigen fluidtechnischen Gerätes 1, beispielsweise eines Ventils oder eines durch Fluidkraft aktivierbaren Antriebes oder einer sonstigen Einrichtung, die im Zusammenhang mit einem hydraulischen oder vorzugsweise einem pneumatischen Druckmedium betrieben wird.

In dem Gehäuse 2 ist mindestens eine vorzugsweise zylindrisch ausgebildete und eventuell mehrmals abgestufte Aufnahme 3 ausgebildet, die mit ihrem axial äußeren Endbereich 4 zu einer Außenfläche 5 des Gehäuses 2 hin offen ist, die beim Ausführungsbeispiel von der Stirnfläche eines kragenartigen Vorsprunges des Gehäuses 2 gebildet ist.

Der axial weiter innen liegende innere Endbereich 6 der Aufnahme 3 geht in einen weiterführenden Fluidkanal 7 des Gehäuses 2 über. Dieser Fluidkanal 7 führt beispielsweise, im Falle eines von einem Ventil gebildeten fluidtechnischen Gerätes 1, zu einer Ventilkammer, der ein nicht näher gezeigtes Ventilglied zugeordnet ist.

Das Gehäuse 2 repräsentiert einen nachfolgend mit Bezugsziffer 8 bezeichneten Haltekörper für eine in ihrer Allgemeinheit mit Bezugsziffer 12 bezeichnete Anschlusseinheit, zusammen mit der er eine Anschlussvorrichtung 13 definiert, die den vorzugsweise lösbaren Anschluss einer strichpunktiert angedeuteten Fluidleitung 14 gestattet. Auf diese Weise kann eine fluidische Verbindung zwischen der nach Bedarf starren oder flexiblen Fluidleitung 14 und dem Fluidkanal 7 hergestellt werden. Das Anschließen der Fluidleitung 14 erfolgt beim Ausführungsbeispiel sehr einfach durch koaxiales Einstecken in die Anschlusseinheit 12, von der sie im eingesteckten Zustand lösbar gehalten wird. In Figur 1 ist dieser eingesteckte Zustand der Fluidleitung 14 illustriert.

Der Haltekörper 8 und somit auch die die Aufnahme 3 begrenzende Wandung besteht beim Ausführungsbeispiel aus Metall und dabei insbesondere aus einem durch ein Druckgießverfahren in die gewünschte Gestalt geformten Aluminiummaterial, einem Material, das bei fluidtechnischen Geräten sehr häufig für die Gestaltung von Gehäusen Verwendung findet. Mit diesem Material und Formgebungsverfahren lassen sich verhältnismäßig einfach optimale Formgebungen verwirklichen, wobei gleichzeitig eine relativ hohe Festigkeit erreicht wird.

Die Anschlusseinheit 12 verfügt über einen einen axialen Durchgang 15 aufweisenden hülsenartigen Einsatzkörper 16, der im Rahmen einer Steckmontage in der durch Pfeil angedeuteten Montagerichtung 17 in der Aufnahme 3 festgelegt ist. Bei der Steckmontage wird der Einsatzkörper 16 unter Aufbringung einer gewissen Montagekraft koaxial gemäß Pfeil 17 von axial außen her in die Aufnahme 3 eingepresst.

Im an dem Haltekörper 8 montierten Zustand der Anschlusseinheit 12 ist der Einsatzkörper 16 vorzugsweise über seine gesamte axiale Länge in der Aufnahme 3 aufgenommen und schließt insbesondere bündig mit der oben erwähnten Außenfläche 5 des Haltekörpers 8 ab.

Der Einsatzkörper 16 verfügt an seinem radial orientierten Außenumfang über von einem oder mehreren nach radial außen ragenden Vorsprüngen gebildete Verankerungsmittel 18, durch die er in der Aufnahme 3 mit einem Verzahnungseffekt derart gehalten ist, dass ein Herausziehen aus der Aufnahme 3 verhindert wird. Beim Ausführungsbeispiel bestehen die Verankerungsmittel 18 aus einem zum Einsatzkörper 16 konzentrischen ringförmigen Verankerungsvorsprung 22, der sägezahnähnlich profiliert ist und an den sich axial beidseits zylindrische Abschnitte der Außenumfangsfläche 23 des Einsatzkörpers 16 anschließen, bezüglich denen er radial vorsteht.

Bei einer nicht näher dargestellten Ausführungsform sind mehrere zueinander koaxiale ringförmige Verankerungsvorsprünge vorgesehen, die mit axialem Abstand zueinander angeordnet sind. Es hat sich allerdings erwiesen, dass ein ausreichender Halt bereits mit nur einem Verankerungsvorsprung 22 gewährleistet werden kann.

Der Einsatzkörper 16 ist beim Ausführungsbeispiel ein Metallkörper und besteht vorzugsweise aus Messingmaterial. Die Verankerungsmittel 18 sind zweckmäßigerweise einstückiger Bestandteil des Einsatzkörpers 16 und bestehen somit beim Ausführungsbeispiel ebenfalls aus Metall, was die Übertragung hoher Zugkräfte gewährleistet

Die Verankerung des Einsatzkörpers 16 in der Aufnahme 3 erfolgt nicht durch unmittelbares Zusammenwirken mit dem Haltekörper 8, sondern unter Zwischenschaltung eines zusätzlichen Bauteils in Gestalt eines aus Kunststoffmaterial bestehenden Halteringes 24. Dieser Haltering 24 ist koaxial in der Aufnahme 3 angeordnet und ist in einer am Innenumfang der Aufnahme 3 vorgesehenen Ringnut 25 des Halterkörpers 8 fixiert.

Die Ringnut 25 hat eine nach radial innen weisende zylindrische Nutgrundfläche 26 sowie zwei ihre seitliche Begrenzung definierende und axial zueinander weisende Nutflanken 27, 28. Die bezüglich der Aufnahme 3 axial weiter außen liegende und nach axial innen weisende Nutflanke sei nachfolgend als äußere Nutflanke 27 bezeichnet, die axial weiter innen liegende und nach axial außen orientierte Nutflanke als innere Nutflanke 28.

Der vorzugsweise über einen Rechteckquerschnitt verfügende Haltering 24 sitzt mit seinem nach radial außen orientierten Abschnitt in der Ringnut 25 ein, wobei seine beiden einander entgegengesetzten axialen Stirnflächen 32, 33 jeweils einer der äußeren beziehungsweise inneren Nutflanken 27, 28 zugewandt sind. Auf diese Weise ist der Haltering 24 an einer nennenswerten Axialbewegung bezüglich dem Haltekörper 8 gehindert, er ist quasi durch Formschusskontakt mit dem Haltekörper 8 axial unbeweglich fixiert.

Verbunden ist dies beim Ausführungsbeispiel allerdings mit einem geringfügigen axialen Bewegungsspiel, das auf die Art der Montage des Halteringes 24 zurückzuführen ist. So ist der Haltering 24 beim Ausführungsbeispiel nicht, was prinzipiell möglich wäre, in die Ringnut 25 eingeformt, beispielsweise im Rahmen eines Spritzgießverfahrens. Vielmehr erfolgt die Montage des Halteringes 24 im vorgefertigten Zustand des letzteren in der Montagerichtung 17 von außen her durch Einschnappen bzw. Einrasten in die Ringnut 25.

Damit der Haltering 24 bei der Montage durch den der Ringnut 25 axial zur Außenseite der Aufnahme 3 hin vorgelagerten äußeren Abschnitt 34 der Aufnahme 3 hindurchgeführt werden kann - der Durchmesser dieses äußeren Abschnittes 34 ist geringer als derjenige der Nutgrundfläche 24 - ist der Haltering 24 gemäß Figur 2 an einer Stelle seines Umfanges geschlitzt. Die Breite des radial und axial durchgehenden Schlitzes 35 ist so gewählt, dass der Haltering 24 zu seiner Montage durch Aufbringen radialer Kräfte vorübergehend unter Verringerung seines Außenquerschnittes beziehungsweise Außenumfanges soweit zusammendrückbar ist, dass er durch den äußeren Abschnitt 24 der Aufnahme 3 hindurchpasst. Erreicht der auf diese Weise verformte und in die Aufnahme 3 eingeführte Haltering 24 die Axialposition der Ringnut 25, weitet er sich aufgrund der Elastizität seines Materials unter neuerlicher Vergrößerung der Schlitzbreite 35 selbsttätig auf, so dass er in die Ringnut 25 unter radialer Überlappung der Nutflanken 27, 28 einschnappt.

Die elastisch rückfedernden Eigenschaften des Halteringes 24 können problemlos dadurch erhalten werden, dass man den Haltering 24 aus einem Elastomer-Kunststoffmaterial herstellt, insbesondere aus Polyoxymethylen-Kunststoff.

Im in der Ringnut 25 montierten Zustand steht der Haltering 24 radial ein Stück weit über die Innenumfangsfläche des äußeren Abschnittes 34 der Aufnahme 3 nach radial innen vor.

Die Steckmontage des Einsatzkörpers 16 in der Aufnahme 3 erfolgt nach der vorherigen Montage des Halteringes 24 in der Ringnut 25. Dabei ist der Außenumfang des Einsatzkörpers 16 zweckmäßigerweise derart auf den Innenumfang des Halteringes 24 abgestimmt, dass für die Steckmontage eine gewisse Kraft erforderlich ist, weil der Haltering 24 radial zwischen dem Haltekörper 8 und dem Einsatzkörper 16 verspannt wird. Auf diese Weise ergibt sich ein radial spielfreier Sitz des Einsatzkörpers 16 in der Aufnahme 3.

Bei der Steckmontage des Einsatzkörpers 16 werden auch die Verankerungsmittel 18 in den Haltering 24 eingeführt. Da sie über die in flächigem Kontakt mit der Innenumfangsfläche des Halteringes 24 stehende Außenumfangsfläche 23 des Einsatzkörpers 16 vorstehen, greifen sie von radial innen her formschlüssig in das Kunststoffmaterial des Halteringes 24 ein. Es ergibt sich somit ein Verzahnungseffekt, der verhindert, dass der Einsatzkörper 16 entgegen der Montagerichtung 17 aus dem Haltering 24 herausziehbar ist. Die über die Verankerungsmittel 18 vom Einsatzkörper 16 auf den Haltering 24 übertragenen Zugkräfte werden letztlich vom Haltekörper 8 aufgenommen, an dem sich der Halterring 24 axial abstützen kann. Die Abstützung erfolgt durch die beiden Nutflanken 27, 28 in beiden axialen Richtungen, so dass der Haltering 24 nicht nur durch Formschluss an einem Herausziehen aus der Aufnahme 3 gesichert ist, sondern auch seine axiale Montagetiefe begrenzt wird und er in seiner axialen Position gehalten wird, wenn der Einsatzkörper 16 koaxial eingepresst wird.

Da die am Einsatzkörper 16 vorgesehenen Verankerungsmittel 18 nur in das Kunststoffmaterial des Halteringes 24 eindringen und nicht mit dem härteren Metallmaterial des Haltekörpers 18 zusammenwirken, ist gewährleistet, dass selbst bei pulsierender Druckbeaufschlagung der Fluidleitung 14 und damit verbundenen geringfügigen axialen Relativbewegungen zwischen dem Einsatzkörper 16 und dem Haltekörper 18 der gewünschte Verzahnungseffekt zuverlässig beibehalten bleibt und ein Ausreißen verhindert wird.

Obgleich es prinzipiell möglich wäre, den Haltering 14 zum Beispiel durch Verkleben oder durch sonstige Maßnahmen zusätzlich kraftschlüssig in der Aufnahme 3 zu befestigen, kann auf eine derartige Maßnahme beim Ausführungsbeispiel verzichtet werden, was die Montage sehr vereinfacht.

Ein weiterer vorteilhafter Aspekt resultiert daraus, dass der Innendurchmesser d_{I} des der Ringnut 25 axial vorgelagerten äußeren Abschnittes 34 der Aufnahme 3 nicht geringer ist als der von den Verankerungsmitteln 18 definierte Außendurchmesser d_{A} des Einsatzkörpers 16. Zweckmäßigerweise ist der Innendurchmesser d_{I} größer als der erwähnte Außendurchmesser d_{A}, so dass beim Einstecken des Einsatzkörpers 16 in die Aufnahme 3 mit Sicherheit ein Kontakt der Verankerungsmittel 18 mit den dem Haltering 24 vorgelagerten metallischen Bereichen des Halterkörpers 8 ausgeschlossen wird. Dadurch wird ein versehentliches Abscheren der Verankerungsmittel 18 verhindert, die aufgrund der Materialwahl in aller Regel eine geringere Festigkeit besitzen als das Material des Haltekörpers 8.

Die Anschlusseinheit 12 kann mit ihrem Einsatzkörper 16 ohne Verwendung des erwähnten Halteringes 24 direkt in der Aufnahme 3 eines aus Kunststoffmaterial bestehenden Haltekörpers fixiert werden. Zur Montage der Anschlusseinheit 12 in der Aufnahme 3 eines aus Metall bestehenden Haltekörpers 8 genügt es, die Aufnahme 3 in der erwähnten Weise mit einem aus Kunststoffmaterial bestehenden Haltering 24 zu bestücken, der an der Schnittstelle zum Einsatzkörper 16 die Bedingungen vergleichbar einem Kunststoff-Haltekörper schafft, so dass die Anschlusseinheit 12 wahlweise zur Montage in einem Kunststoff-Haltekörper oder in einem Metall-Haltekörper geeignet ist.

Zum Halten der eingesteckten Fluidleitung 14 in der Anschlusseinheit 12 ist letztere im Bereich des Innenumfanges des Einsatzkörpers 16 mit Haltemitteln 36 ausgestattet. Diese sind beim Ausführungsbeispiel von am Einsatzkörper 16 fixierten, gleichwohl jedoch relativ zum Einsatzkörper 16 beweglichen federelastischen Krallenelementen gebildet, die als Bestandteil eines vorzugsweise vollständig aus Metall bestehenden Ringkörpers 37 ausgeführt sind, der mit einem äußeren Ringabschnitt 38 in einer Vertiefung des Einsatzkörpers 16 oder auf andere Weise am Einsatzkörper 16 gehalten ist. Die Haltemittel 36 sind aus der strichpunktiert angedeuteten Hauptausdehnungsebene 42 des Ringkörpers 37 in der Montagerichtung 17 ausgebogen und verlaufen zu ihrem freien Ende hin schräg nach radial innen und zugleich in der Montagerichtung 17. Ihre freien Enden definieren einen Innendurchmesser des Ringkörpers 37, der, bei nicht eingesteckter Fluidleitung 14 betrachtet, geringer ist als der Außendurchmesser dieser Fluidleitung 14.

Eine anzuschließende Fluidleitung 14 wird von der dem äußeren axialen Endbereich 4 der Aufnahme 3 zugeordneten Handhabungsseite 43 her in der Montagerichtung 17 in die Anschlusseinheit 12 eingesteckt. Dabei gelangt sie mit ihrer Stirnseite in Kontakt mit der entgegen der Montagerichtung 17 orientierten schrägen Rückseite der Haltemittel 36, welche daraufhin nach radial außen verschwenkt werden, so dass die Fluidleitung 14 durch den Ringkörper 37 hindurch steckbar ist. Bedingt durch die federnde Rückstellkraft der Haltemittel 36 wird anschließend die Fluidleitung 14 im Bereich ihres Außenumfanges krallenartig von den Haltemitteln 36 beaufschlagt und gehalten. Dabei können die Haltemittel 36 mit ihren freien Enden formschlüssig mit der Fluidleitung 14 in Eingriff gelangen.

In Fällen, bei denen wie beim Ausführungsbeispiel ein bedarfsgemäßes Entfernen einer zuvor angeschlossenen Fluidleitung 14 ermöglicht werden soll, ist die Anschlusseinheit 12 mit einem Lösekörper 44 ausgestattet. Dieser ragt mit einem hülsenartigen Beaufschlagungsabschnitt 45 von der Handhabungsseite 43 aus in den axialen Durchgang 15 des Einsatzkörpers 16 hinein. Über den Beaufschlagungsabschnitt 45 ist der Lösekörper 44 am Innenumfang des Einsatzkörpers 16 axial verschiebbar geführt. Ein mit dem Beaufschlagungsabschnitt 45 verbundener und zum Beispiel flanschartig gestalteten Handhabungsabschnitt 46 befindet sich außerhalb des Einsatzkörpers 16 und ist diesem zur Handhabungsseite 43 hin vorgelagert.

Der Lösekörper 44 besitzt eine koaxiale Durchbrechung 47, die von der eingesteckten Fluidleitung 14 durchsetzt wird.

Der Lösekörper 44 erstreckt sich ins Innere des Einsatzkörpers 16 bis hin zur Rückseite der Haltemittel 36. Zum Entfernen der Fluidleitung 14 wird manuell auf den Handhabungsabschnitt 46 eine mit der Montagerichtung 17 gleichgerichtete Betätigungskraft ausgeübt, so dass der Lösekörper 44 in der Montagerichtung 17 verlagert wird, wobei er rückseitig auf die Haltemittel 36 einwirkt und diese zu einer radial nach außen gerichteten und als Freigabebewegung bezeichenbaren Schwenkbewegung veranlasst. Die Haltemittel 36 gelangen auf diese Weise außer Eingriff mit der Wandung der Fluidleitung 14, die somit aus der Anschlusseinheit 12 herausgezogen werden kann.

Zweckmäßigerweise ist der Lösekörper 44 verliersicher an dem Einsatzkörper 16 gehalten. Dies kann beispielsweise dadurch geschehen, dass er über einen oder mehrere nach radial außen weisende Radialvorsprünge 48 verfügt, die eine Stufe 49 am Innenumfang des Einsatzkörpers 16 hintergreifen können.

Die zum Einpressen des Einsatzkörpers 16 in die Aufnahme 3 beziehungsweise den Haltering 24 erforderliche Einpresskraft kann beim Ausführungsbeispiel auf den Handhabungsabschnitt 46 des Lösekörpers 44 aufgebracht werden. Dieser wird dabei zunächst ein Stück weit in den Einsatzkörper 16 hineingeschoben, bis er mit einer Abstützfläche 52 an der gegenüberliegenden Stirnfläche 53 des Einsatzkörpers 16 zur Anlage gelangt, so dass die Einpresskraft auf den Einsatzkörper 16 übertragen wird.

Die Einstecktiefe des Einsatzkörpers 16 kann beispielsweise durch einen am axial äußeren Ende des Einsatzkörpers 16 vorgesehenen und über die Außenumfangsfläche 23 radial vorstehenden Anschlagbund 54 begrenzt werden, der bei Erreichen der vorgesehenen Montagetiefe an der axial nach außen orientierten axialen Stirnfläche 32 des radial nach innen über die Ringnut 25 vorstehenden Abschnittes des Halteringes 24 zur Anlage gelangt.

Letztlich ist die Anschlussvorrichtung 13 noch mit einer beispielsweise von einer einzigen, einstückigen Dichtung gebildeten Dichtungseinrichtung 55 ausgestattet, die eine Doppelfunktion hat, indem sie zum einen gegenüber dem Haltekörper 8 und zum anderen gegenüber der eingesteckten Fluidleitung 14 abdichtet. Sie befindet sich vorzugsweise an einer dem Einsatzkörper 16 axial innen koaxial vorgelagerten Stelle im Innern der Aufnahme 3. Die eingesteckte Fluidleitung 14 greift durch die Dichtungseinrichtung 55 hindurch. Während die Dichtungseinrichtung 55 beim Ausführungsbeispiel ein separates Bauteil ist, versteht es sich, dass sie auch in Baueinheit mit dem Einsatzkörper 16 ausgeführt werden kann.

## Patentansprüche

1. Anschlussvorrichtung für eine Fluidleitung, mit einer Anschlusseinheit (12), die einen durch Steckmontage in einer Aufnahme (3) eines metallischen Haltekörpers (8) platzierten hülsenartigen Einsatzkörper (16) aufweist, an dessen Außenumfang zur Verankerung in der Aufnahme (3) dienende und von einem oder mehreren Vorsprüngen gebildete Verankerungsmittel (18) vorgesehen sind, **gekennzeichnet durch** einen aus Kunststoffmaterial bestehenden Haltering (24), der in einer am Innenumfang der Aufnahme (3) vorgesehenen Ringnut (25) fixiert ist, so dass er sich axial in beiden Richtungen bezüglich dem Haltekörper (8) abstützen kann, wobei der Einsatzkörper (16) koaxial in den Haltering (24) eingesteckt ist und mit seinen verankerungsmitteln (18) in das Kunststoffmaterial des Halteringes (24) eingreift.

2. Anschlussvorrichtung nach Anspruch 1, **dadurch gekennzeichnet, dass** die Verankerungsmittel aus Metall bestehen.

3. Anschlussvorrichtung nach Anspruch 1 oder 2, **dadurch gekennzeichnet, dass** die Verankerungsmittel (18) einen, oder mehrere mit axialem Abstand aufeinanderfolgende, zum Einsatzkörper (16) konzentrische ringförmige Vorsprünge (22) enthalten, insbesondere mit zahnartiger Profilierung.

4. Anschlussvorrichtung nach einem der Ansprüche 1 bis 3,
**dadurch gekennzeichnet, dass** der Haltering (24) an seinen beiden axialen Stirnseiten jeweils von einer Flanke (27, 28) der Ringnut (25) flankiert ist.

5. Anschlussvorrichtung nach einem der Ansprüche 1 bis 4,
**dadurch gekennzeichnet, dass** der Haltering (24) mit geringfügigem axialem Spiel in der Ringnut (25) einsitzt.

6. Anschlussvorrichtung nach einem der Ansprüche 1 bis 5,
**dadurch gekennzeichnet, dass** der Haltering (24) allein durch Formschlusskontakt mit den ihn axial flankierenden Bereichen der Ringnut (25) am Haltekörper (8) axial fixiert ist.

7. Anschlussvorrichtung nach einem der Ansprüche 1 bis 6,
**dadurch gekennzeichnet, dass** der Haltering (24) an einer Stelle seines Umfanges geschlitzt ist, wobei die Schlitzbreite so gewählt ist, dass der Haltering (24) zu seiner Montage vorübergehend derart unter Verringerung seines Außenquerschnittes elastisch rückfedernd zusammendrückbar ist, dass er von außen her durch den der Ringnut (25) axial vorgelagerten äußeren Abschnitt (34) der Aufnahme (3) hindurch in der Ringnut (25) platzierbar ist.

8. Anschlussvorrichtung nach einem der Ansprüche 1 bis 7,
**dadurch gekennzeichnet, dass** der Haltering (24) aus Elastomermaterial und insbesondere aus Polyoxymethylen-Material besteht.

9. Anschlussvorrichtung nach einem der Ansprüche 1 bis 8,
**dadurch gekennzeichnet, dass** der Innendurchmesser des dem Haltering (24) axial vorgelagerten äußeren Abschnittes (34) der Aufnahme (3) größer ist als der Innendurchmesser des Halteringes (24) und dabei nicht kleiner und vorzugsweise größer als der von den Verankerungsmitteln (18) definierte Außendurchmesser des Einsatzkörpers (16).

10. Anschlussvorrichtung nach einem der Ansprüche 1 bis 9,
**dadurch gekennzeichnet, dass** im Bereich des Innenumfanges des Einsatzkörpers (16) Haltemittel (36) zum Festhalten der in den Einsatzkörper (16) eingeführten und anzuschließenden Fluidleitung (14) vorgesehen sind.

11. Anschlussvorrichtung nach Anspruch 10, **dadurch gekennzeichnet, dass** die Haltemittel (36) von nach innen ragenden, federelastisch beweglichen Krallenelementen gebildet sind, die in der Lage sind, eine eingesteckte Fluidleitung umfangsseitig zu beaufschlagen.

12. Anschlussvorrichtung nach Anspruch 10 oder 11, **dadurch gekennzeichnet, dass** die Anschlusseinheit (12) einen bezüglich dem Einsatzkörper (16) beweglichen Lösekörper (44) aufweist, der in den Einsatzkörper (16) hineinragt und durch manuelle Betätigung derart auf die Haltemittel (36) einwirken kann, dass diese eine nach radial außen gerichtete Freigabebewegung ausführen.

13. Anschlussvorrichtung nach einem der Ansprüche 1 bis 12, **gekennzeichnet durch** eine dem Einsatzkörper (16) axial innen koaxial vorgelagerte ringförmige Dichtungseinrichtung (55), die zum dichtenden Zusammenarbeiten mit dem Haltekörper (8) und der einzusteckenden Fluidleitung (14) vorgesehen ist.

14. Anschlussvorrichtung nach einem der Ansprüche 1 bis 13,
**dadurch gekennzeichnet, dass** der Haltekörper (8) von einem Bestandteil eines fluidtechnischen Gerätes, beispielsweise eines Ventils oder eines Antriebes, gebildet ist, insbesondere vom Gehäuse (2) dieses fluidtechnischen Gerätes.

## Claims

1. Connecting device for a fluid line, with a connecting unit (12) comprising a sleeve like insert body (16) placed in a location (3) of a metallic retaining body (8) by plugging and provided with anchoring means (18) represented by one or more projections on its external circumference for anchorage in the location (3), **characterised by** a retaining ring (24) made of a plastic material, which is located in an annular groove (25) provided on the internal circumference of the location (3), so that it is axially supported in both directions relative to the retaining body (8), whereby the insert body (16) is coaxially inserted into the retaining ring (24) and engages the plastic material of the retaining ring (24) with its anchoring means (18).

2. Connecting device according to claim 1, **characterised in that** the anchoring means are made of metal.

3. Connecting device according to claim 1 or 2, **characterised in that** the anchoring means (18) include one or more axially spaced annular projections (22) concentric with the insert body (16) and having an in particular tooth-like profile.

4. Connecting device according to any of claims 1 to 3, **characterised in that** the retaining ring (24) is flanked by a flank (27, 28) of the annular groove (25) at each of its axial end faces.

5. Connecting device according to any of claims 1 to 4, **characterised in that** the retaining ring (24) is seated in the annular groove (25) with little axial play.

6. Connecting device according to any of claims 1 to 5, **characterised in that** the retaining ring (24) is axially located on the retaining body (8) exclusively by positive contact with the axially flanking areas of the annular groove (25),

7. Connecting device according to any of claims 1 to 6, **characterised in that** the retaining ring (24) is slotted at one point of its circumference, the width of the slot being so chosen that the retaining ring (24) can temporarily be resiliently compressed for installation to reduce its external cross-section, so that it can be placed into the annular groove (25) from the outside through the outer section (34) of the location (3), which is located axially in front of the annular groove (25).

8. Connecting device according to any of claims 1 to 7, **characterised in that** the retaining ring (24) is made of an elastomer material and in particular of a polyoxymethylene material.

9. Connecting device according to any of claims 1 to 8, **characterised in that** the internal diameter of the outer section (34) of the location (3), which is located axially in front of the retaining ring (24), is larger than the internal diameter of the retaining ring (24) and no smaller but preferably larger than the external diameter of the insert body (16) defined by the anchoring means (18).

10. Connecting device according to any of claims 1 to 9, **characterised in that** retaining means (36) are provided in the area of the internal circumference of the insert body (16) for retaining the fluid line (14) inserted into the insert body (16) and to be connected.

11. Connecting device according to claim 10, **characterised in that** the retaining means (36) are represented by spring-elastically movable claw elements projecting inwards, which are capable of exerting pressure on the circumference of the inserted fluid line.

12. Connecting device according to claim 10 or 11, **characterised in that** the connecting unit (12) comprises a release body (44) movable relative to the insert body (16), which projects into the insert body (16) and can, when manually operated, act on the retaining means (36) to cause them to perform a releasing movement directed radially outwards.

13. Connecting device according to any of claims 1 to 12, **characterised by** an annular sealing device (55) coaxial with and located axially in front of the insert body (16) if viewed from the inside and provided to act together with the retaining body (8) and the fluid line (14) to be inserted to form a seal.

14. Connecting device according to any of claims 1 to 13, **characterised in that** the retaining body (8) is represented by a part of a fluid power device, for instance a valve or a drive, in particular by the housing (2) of said fluid power device.

## Revendications

1. Dispositif de raccordement d'une conduite pour fluide, avec une unité de raccordement (12) qui comporte un insert (16) de type manchon placé par montage à emboîtement dans un logement (3) d'un corps de maintien (8) métallique, des moyens d'ancrage (18), servant à l'ancrage dans le logement (3) et formés d'une ou de plusieurs saillies, étant prévus sur le pourtour extérieur dudit insert, **caractérisé par** une bague de maintien (24) en matière plastique qui est fixée dans une rainure annulaire (25), prévue sur le pourtour intérieur du logement (3), de manière à pouvoir prendre appui axialement dans les deux sens par rapport au corps de maintien (8), l'insert (16) étant emboîté coaxialement dans la bague de maintien (24) et s'engageant, par ses moyens d'ancrage (18), dans la matière plastique de la bague de maintien (24).

2. Dispositif de raccordement selon la revendication 1, **caractérisé en ce que** les moyens d'ancrage sont en métal.

3. Dispositif de raccordement selon la revendication 1 ou 2, **caractérisé en ce que** les moyens d'ancrage (18) contiennent une ou plusieurs saillies (22) de forme annulaire concentriques à l'insert (16), se succédant à distance axiale, en particulier avec profilage de type dent.

4. Dispositif de raccordement selon l'une des revendications 1 à 3, **caractérisé en ce que** la bague de maintien (24) est flanquée sur chacun de ses deux côtés frontaux axiaux par un flanc (27, 28) de la rainure annulaire (25).

5. Dispositif de raccordement selon l'une des revendications 1 à 4, **caractérisé en ce que** la bague de maintien (24) s'insère avec un léger jeu axial dans la rainure annulaire (25).

6. Dispositif de raccordement selon l'une des revendications 1 à 5, **caractérisé en ce que** la bague de maintien (24) est fixée axialement sur le corps de maintien (8) uniquement par contact par complémentarité de forme avec les zones de la rainure annulaire (25) qui la flanquent axialement.

7. Dispositif de raccordement selon l'une des revendications 1 à 6, **caractérisé en ce que** la bague de maintien (24) est fendue en un point de son pourtour, la largeur de la fente étant choisie de manière que pour son montage, la bague de maintien (24) puisse être provisoirement comprimée élastiquement en retour avec réduction de sa section transversale extérieure, de manière qu'elle puisse être placée dans la rainure annulaire (25), de l'extérieur, à travers le tronçon extérieur (34), situé axialement devant la rainure annulaire (25), du logement (3).

8. Dispositif de raccordement selon l'une des revendications 1 à 7, **caractérisé en ce que** la bague de maintien (24) est en matériau élastomère et en particulier en matériau de polyoxyméthylène.

9. Dispositif de raccordement selon l'une des revendications 1 à 8, **caractérisé en ce que** le diamètre intérieur du tronçon extérieur (34), situé axialement devant la bague de maintien (24), du logement (3), est supérieur au diamètre intérieur de la bague de maintien (24) et en même temps non inférieur et de préférence supérieur au diamètre extérieur, défini par les moyens d'ancrage (18) de l'insert (16).

10. Dispositif de raccordement selon l'une des revendications 1 à 9, **caractérisé en ce que** dans la zone du pourtour intérieur de l'insert (16) sont prévus des moyens de maintien (36) pour fixer la conduite pour fluide (14) introduite dans l'insert (16) et à raccorder.

11. Dispositif de raccordement selon la revendication 10, **caractérisé en ce que** les moyens de maintien (36) sont formés par des éléments à griffe dépassant vers l'intérieur, déplaçables élastiquement, qui sont en mesure d'agir côté périphérie sur une conduite pour fluide emboîtée à l'intérieur.

12. Dispositif de raccordement selon la revendication 10 ou 11, **caractérisé en ce que** l'unité de raccordement (12) comporte un corps de déverrouillage (44) déplaçable par rapport à l'insert (16), qui s'engage à l'intérieur de l'insert (16) et peut agir, par actionnement manuel, sur les moyens de maintien (36), de façon que ceux-ci exécutent un mouvement de libération dirigé radialement vers l'extérieur.

13. Dispositif de raccordement selon l'une des revendications 1 à 12, **caractérisé par** un dispositif d'étanchéité (55) de forme annulaire, placé axialement à l'intérieur et coaxialement devant l'insert (16), qui est prévu pour coopérer de manière étanche avec le corps de maintien (8) et la conduite pour fluide (14) à emboîter à l'intérieur.

14. Dispositif de raccordement selon l'une des revendications 1 à 13, **caractérisé en ce que** le corps de maintien (8) est formé par une partie intégrante d'un appareil fluidique, par exemple d'une soupape ou d'un dispositif d'entraînement, en particulier par la cage (2) de cet appareil fluidique.
